# EUROPEAN PATENT SPECIFICATION

(11) **EP 0 581 869 B1**
(45) Date of publication and mention of the grant of the patent: **27.09.1995**
(21) Application number: 92911589.7
(22) Date of filing: 22.04.1992
(51) Int. Cl.: F23C 11/04, F23C 11/02, F23G 5/30, B01J 8/40, F22B 31/00

(54) **PULSED ATMOSPHERIC FLUIDIZED BED COMBUSTOR APPARATUS AND PROCESS**
PULSIERENDE ATMOSPHÄRISCHE WIRBELSCHICHTVERBRENNUNGSANLAGE UND VERFAHREN
PROCEDE ET APPAREIL DE COMBUSTION ATMOSPHERIQUE A LIT FLUIDISE A IMPULSION

(30) Priority: 22.04.1991 US 689336
(43) Date of publication of application: 09.02.1994
(73) Proprietor: Mansour, Momtaz N., Highland, MD 20777 (US)
(72) Inventor: Mansour, Momtaz N., Highland, MD 20777 (US)
(74) Representative: Harvey, David Gareth
(86) International application number: PCT/US92/03254
(87) International publication number: WO 92/18809

(56) References cited:
- DE-A- 3 109 685
- SOVIET INVENTIONS ILLUSTRATED Section PQ, Week E37, 27 October 1982 Derwent Publications Ltd., London, GB; Class Q7, Page 3, AN M2361 E/37 & SU-879 146 (BELO POWER IND DES) 29 February 1980
- PATENT ABSTRACTS OF JAPAN vol. 13, no. 286 (C-613) 29 June 1989 & JP-A-1 080 437 (MEITETSUKU K.K.) 27 March 1989

## Description

### Technical Field

The present invention relates to a pulsed fluidized bed reaction apparatus and process for combustion of solid fuels and other operations in an efficient, environmentally acceptable, and economical manner.

### Background Art

Many technologies have been developed and/or demonstrated for utilizing high-sulfur fuels in general and coals in particular. From a performance, emissions, and economics standpoint, fluidized bed combustion technology has emerged as a leading candidate for utilizing high sulfur fuels. Many fluidized bed combustion designs are available and are at various stages of commercialization. Such systems can be classified in terms of operating pressure (atmospheric or pressurized) and fluidization mode (bubbling or circulating). All the fluidized bed designs possess attributes such as in-situ sulfur capture, no slagging or fouling of heat transfer surfaces, high heat transfer rates to heat exchange surfaces, near uniform temperature in combustion zone, and fuel flexibility. These features have made it possible for fluidized bed combustion technology to compete successfully for the large industrial boiler market (6.3-37.8 kg/s or 50,000 -300,000 lb/hr steam). Large-scale (70 to 150 MWₑ) field demonstration projects are in progress to facilitate commercialization in the utility sector. The potential of fluidized bed combustion technology, and specifically, atmospheric fluidized bed combustion for small-scale (<6.3 kg/s or 50,000 lb/hr steam equivalent) applications have, however, not been explored seriously until recently.

Atmospheric fluidized bed combustion technology appears to have a great potential for oil and gas replacement in small-scale installations of less than 6.3 kg/s (50,000 lb/hr) steam equivalent. These smaller units can meet the needs of process heat, hot water, steam, and space heating in the residential, commercial, and industrial sectors. Currently, oil and natural gas-fired equipment are being used almost exclusively for these applications. Due to the large difference between the prices of these fuels and coal, coal-fueled atmospheric fluidized bed combustion technology engineered for small-scale applications has the potential of becoming very competitive under economic conditions in which the price differential overcomes the initial capital cost of the coal-based system. A successful coal-fueled system cannot only be more economical, but can also reduce the nation's dependence on foreign oil and open up new markets for domestic coal and the coal-fueled fluid-bed technologies.

Market analysis indicates that a coal-based system that provides competitive levels of capital and operation and maintenance costs, performance, and reliability at the 0.126 to 1.26 kg/s (1,000 to 10,000 lb/hr) steam generation rate can displace as much as 2.64 EJ (2.5 quad Btu) of gas and oil within the residential, commercial, and light industrial sectors. In the industrial sector, systems from 1.26 to 6.3 kg/s (10,000 to 50,000 lb/hr) steam can displace another 1.16 EJ (1.1 quad Btu) of energy per year.

As pointed out earlier, the atmospheric fluidized bed combustion systems can be classified into bubbling-bed and circulating-bed systems. In a coal-fueled bubbling-bed system, it is critical to control the extent of fines (elutriable particles) in the coal and sorbent feed in order to limit particle carryover and its adverse effect on combustion and sulfur capture performance, emissions, and the size of solids collection equipment. Additionally, the higher Ca/S feed ratios typically required in bubbling fluidized combustion applications tend to increase sorbent and waste disposal costs, and turndown capability is rather limited. A circulating fluidized bed combustion system exhibits higher combustion efficiency and sorbent utilization, lower NOₓ emissions due to multiple air staging, and greater fuel flexibility and turndown as compared to a bubbling type system. However, the circulating type system requires a tall combustor to accommodate sufficient heat exchange surface. Such makes it both impractical and expensive to scale-down circulating fluidized bed combustors to sizes significantly smaller than 12.6 kg/s (100,000 lb/hr) steam equivalent.

Fluid bed systems in general tend to have large thermal inertia. Start-up for large fluid bed systems requires a considerable amount of time and also auxiliary subsystems to preheat the beds in a controlled manner. Both add to overall system cost and complexity. Concepts which provide a simple compact design for fast start-up with low-cost hardware and also have simple operational characteristics are a must for small-scale applications. Thermal inertia of fluid bed systems also affects load following to some extent and this has also been a serious shortcoming for scale-down to small end-use applications. System designs must provide fast response to load changes, particularly through auxiliary firing subsystems and methods of bed heating. Such designs should not require additional hardware and control systems if the system capital cost is to be maintained sufficiently low to compete favorably with existing oil and gas equipment. In addition, new designs capable of higher throughput for a given combustor size will contribute to a reduction in capital cost per kJ/hr (Btu/hr) of fuel fired. This must be achieved, however, without compromising the pollution control performance of equipment intended to meet stringent requirements in some of these end-use applications.

"Soviet Inventions Illustrated," SU-879-146 (February 29, 1980) discloses apparatus with a fluidized layer chamber located above a pulsating combustion unit. In operation, the pulsating combustor ignites and sends pulsating combustion products towards a perforated pipe located away from the fluidized bed. The products then flow out of the pipe and upward through an outlet nozzle to act on the fluidized layer chamber. This pulse combustor arrangement actually has a pulse combustor located within a windbox to allow combustion air with some oscillation to flow upward to the fluidized layer chamber. Much of the sound pressure level initially created by the pulse combustor will be lost in the windbox prior to reaching and fluidizing the particles within the fluidized bed chamber.

Simply scaling-down existing large atmospheric fluidized bed combustion systems to a size range suitable for small end-use sectors of interest will result in complex and expensive systems that will not be competitive with presently available oil- and gas-fired equipment. New innovative approaches are needed to reduce cost and enhance performance.

Such a new system should therefore possess a number of attributes, such as high combustion efficiency; high sulfur capture capacity; low NOₓ emissions; and should be capable of rapid start-up with load-following capability. Also, such systems, as with most systems, should be of a simple design with inexpensive, easily managed controls to afford a reliable, safe system. Last, but not least, the system should be at least technologically and economically equivalent to oil- and gas-fired packaged systems.

Fluidized bed pulse combustion technology has not hitherto been explored in great depth. As indicated above, conventional fluidized bed combustors pose problems to anyone intent on scaling them down to below 12.6 kg/s (100,000 lb/hr) steam equivalent. The present invention permits fluidized bed pulse combustors to be down-sized and to be operable economically at 6.1 kg/s (50,000 lb/hr) steam equivalent or less. Another problem lies in controlling the extent of fines and NOₓ emissions when coal and waste materials are burned in preference to the more expensive fuels of oil and natural gas. In tackling this problem, the invention can secure high sulfur capture capacity and low NOₓ emissions from economical fuels such as coal and waste materials.

The apparatus and process according to the present invention overcome the above-noted problems of the prior art and possess the attributes set forth above, and in the specific description hereinafter.

According to one aspect, the present invention provides a pulsed fluidized bed reactor apparatus, comprising a reactor vessel, means for feeding a fluidizable solid material into said vessel intermediate the height of same, means for supplying a fluidizing medium for said solid material into said vessel below said solid material entrance to said vessel to estabish a fluidized bed of solid material therebetween, heat transfer means located in said vessel with respect to said fluidized bed to withdraw heat therefrom; and flue gas exhaust means in communication with said vessel to exhaust products of combustion therefrom; said reactor apparatus being characterized by a pulse combustor unit extending into said vessel, said pulse combustor unit comprising a combustion chamber, valve means associated with said combustion chamber for admitting a fuel-air mixture thereto, a resonance chamber in communication with said combustion chamber and extending outwardly therefrom toward said fluidized bed, and an outer free end of said resonance chamber being located upstream with respect to said fluidized bed to permit gaseous products from said resonance chamber to act directly thereon.

According to another aspect, the present invention provides a pulsed fluidized bed apparatus comprising a) a reaction vessel; b) means for feeding waste materials into said vessel; c) means for fluidizing said waste materials, said fluidizing means including a distributor device positioned within said vessel so that said waste materials may be placed in a fluidized state by said fluidizing means; d) a pulse combustor means extending into said vessel, said pulse combustor means comprising a combustion chamber and at least one opening associated with said combustion chamber for admitting one or more fuel-air mixtures thereto, said pulse combustor means further including a resonance chamber in communication with said combustion chamber and extending toward the location of said waste materials within said vessel, said resonance chamber including diffuser means located at the end of said resonance chamber extending toward the waste materials within said vessel such that the velocity of gaseous products escaping from said resonance chamber is reduced, said resonance chamber and diffuser means being disposed upstream of said waste materials so that said gaseous products may act on said waste materials; and e) flue gas exit means in communication with said vessel so that combustion products may be removed from said vessel, said flue gas exit means including means for separating solids from gases in said combustion products and returning said solids to said vessel for further reaction.

The invention further provides a process of combusting solid fuel wherein a fluidized bed of solid fuel is established and maintained within a vessel therefor and about a heat transfer means and wherein a heat transfer medium is circulated through said heat transfer means to receive heat therefrom for predetermined treatment of said medium and products of combustion are exhausted from said vessel after separation of entrained solids therefrom; the process being characterized by pulse combusting a fuel-air mixture in a fashion to create a pulsating flow of combustion products therefrom and an acoustic pressure wave and directing said pulsating flow of combustion products and said pressure wave downstream towards said fluidized bed of fuel, to act directly on said fluidized bed of solid fuel for combustion of said solid fuel.

### Brief Description of Drawings

The construction designed to carry out the invention will be hereinafter described, together with other features thereof. The invention will be more readily understood from a reading of the following specification and by reference to the accompanying drawings forming a part thereof, wherein an example of the invention is shown and wherein:

Figure 1 is a schematic illustration of a pulsed atmospheric fluidized bed reactor according to teachings of the present invention.

Figure 2 is a schematic illustration of the pulsed atmospheric fluidized bed reactor of Figure 1 in a coal fuel combustion environment.

Figure 3 is a schematic illustration of a pulsed atmospheric fluidized bed reactor designed for steam generation according to the teachings of the present invention.

Figure 4 is a schematic illustration of the pulsed atmospheric fluidized bed reactor of Figure 3 in a steam generation system environment.

Figure 5 is a schematic illustration of a pulsed atmospheric fluidized bed reactor for heating air or drying materials according to the teachings of the present invention.

Figure 6 is a schematic illustration of the pulsed atmospheric fluidized bed reactor of Figure 5 in an environment for drying materials or heating air.

Figure 7 is a schematic illustration of a pulsed atmospheric fluidized bed reactor for incineration of waste according to the teachings of the present invention.

Figure 8 is the pulsed atmospheric fluidized bed reactor of Figure 7 in a waste incineration environment.

Figure 9 is a schematic illustration of a pulsed atmospheric fluidized bed reactor for carrying out endothermic reactions such as gasification and calcination.

### Modes for Carrying Out the Invention

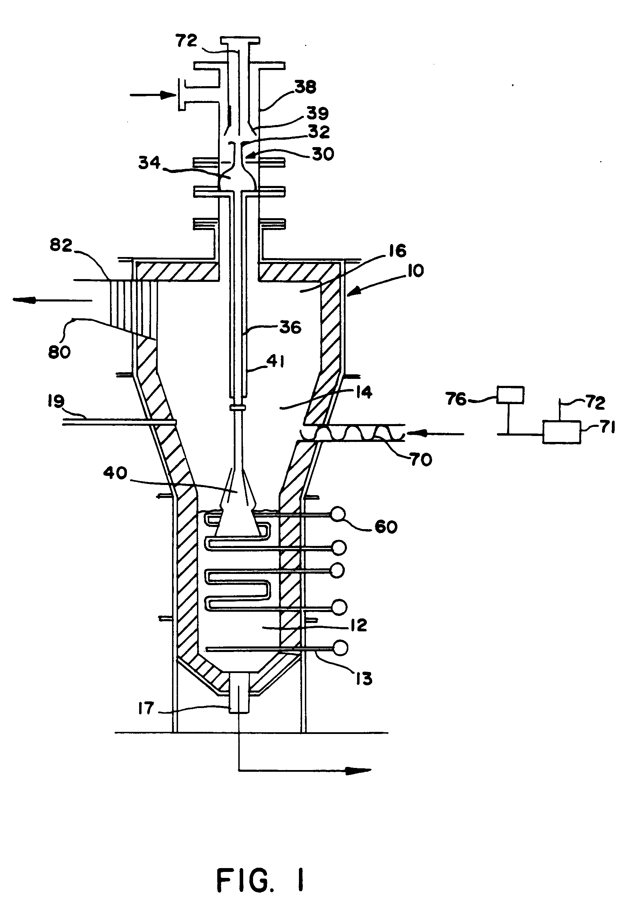

The preferred system according to the present invention integrates a pulse combustor with an atmospheric bubbling-bed type fluidized bed combustor as illustrated in Figure 1. In this modular configuration, the pulse combustor burns the fuel fines which are less than 30 sieve or 600 microns and the fluidized bed combusts the coarse solid fuel particles.

As shown in Figure 1, the pulsed atmospheric fluidized bed apparatus according to the present invention includes a refractory-lined vessel generally 10 in which the fluidized bed will be produced. A pulse combustor generally 30 is integrated with vessel 10 to afford the advantages set forth herein.

Vessel 10 includes a lower section 12, an intermediate section 14, and an upper section 16. Located in lower section 12 of vessel 10 is a fluid distribution means 13 through which fluid may be introduced adequate in velocity to fluidize solids located in lower section 12. Generally speaking, it has been found that fluid velocities in a range of from about 4 to about 13 feet per second are adequate for fluidization. Also located within lower section 12 where the dense fluidized bed will be formed are a plurality of tubes or conduits 60 through which a heat exchange medium may be passed to remove heat from the fluidized bed. Typically, air or water would be circulated through heat exchange tubes 60 to produce heated air, hot water or steam though other materials may be passed therethrough for an intended result.

Intermediate vessel section 14 flares outwardly and connects lower section 12 with upper section 16, with intermediate section 14 and upper section 16 forming what is referred to as the freeboard area of a fluidized bed system, in which gas velocity decreases, gas residence time increases and elutriation decreases. Conversely, the dense fluidized bed in lower vessel section 12 operates in a bubbling, turbulent mode.

Pulse combustor 30 includes valve means 32 which may be an aerodynamic valve or fluidic diode, a mechanical valve or the like, a combustion chamber 34 and a tailpipe 36. Additionally, pulse combustor 30 includes an air plenum 38 and a thrust augmenter 39. Tailpipe or resonator tube 36 may be a single tube as shown or a plurality of tubes and in a preferred embodiment has a diffuser section 40 located at a free end of same. Likewise in a preferred embodiment tailpipe 36 has a water jacket 41 surrounding at least a portion of the length of same.

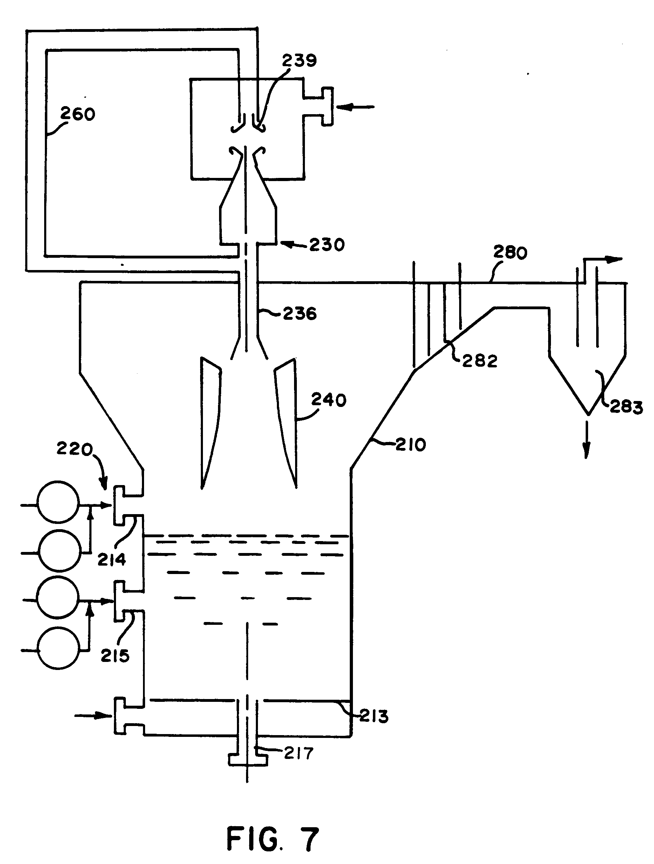

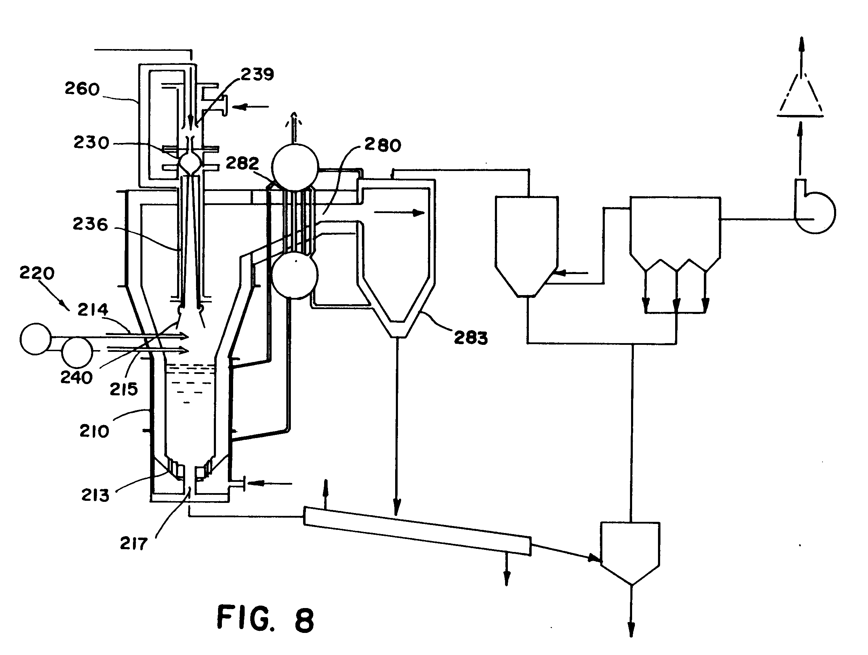

Diffuser section 40 at the end of tailpipe 36 forms an expansion section which reduces the gas exit velocity from tailpipe 36 and prevents channeling in the fluidized bed. After the flue gas from the pulse combustor 30 exits the tailpipe 36 it enters the diffuser section 40 which provides fines recirculation and increased particle residence time in the bed. The diffuser section and/or open end of the tailpipe may extend into the bed of reactants or may be positioned above the bed of reactants (as shown in Figures 7 and 8). Vessel 10 also includes an overbed coarse fuel and sorbent feed system 70, preferably a screw conveyor, and a fuel classifier 71 for separating fuel feed into coarse fraction and fines.

Fines are fed from classifier 71 via line 72 to pulse combustor 30 while the coarse fuel component is fed from classifier 71 to feed system 70. Sorbent such as crushed limestone is fed from a supply hopper 76 to feed system 70 for introduction to vessel 10. While the fuel/sorbent mixture may vary, sorbent content is preferably maintained at a level of two to three times the sulfur ratio of the solid fuel, e.g., coal.

Vessel 10 further includes a product gas exit conduit 80 having a gas solids separator 82, preferably an inertial separator at the entrance thereof to separate elutriated fines from the exit gas stream and return same to upper section 16. Waste rock, ash and the like are discarded from vessel 10 through port 17 located at a lower end of same. A burner 19 is also provided for vessel 10, preferably fired by natural gas to be employed for operational safety and start-up of the system.

A pulse combustor typically includes a flow diode, a combustion chamber and a resonance tube. Fuel and air enter the combustion chamber. An ignition source detonates the explosive mixture in the combustion chamber during start-up. The sudden increase in volume, triggered by the rapid increase in temperature and evolution of combustion products, pressurizes the chamber. As the hot gas expands, the valve, preferably a fluidic diode, permits preferential flow in the direction of the resonance tube. Gases exiting the combustion chamber and the resonance tube possess significant momentum. A vacuum is created in the combustion chamber due to the inertia of the gases within the resonance tube. The inertia of the gases in the resonance tube permits only a small fraction of exhaust gases to return to the combustion chamber, with the balance of the gas exiting the resonance tube. Since the chamber pressure is below atmospheric pressure, air and fuel are drawn into the chamber where autoignition takes place. Again, the valve constrains reverse flow, and the cycle begins anew. Once the first cycle is initiated, engine operation is thereafter self-sustaining.

The flow diode utilized in many other pulse combustion concepts is a mechanical "flapper valve." The flapper valve is actually a check valve permitting flow from inlet to chamber, and constraining reverse flow by a mechanical seating arrangement. This served quite well for the purpose intended. While such a mechanical valve may be used in conjunction with the present system, an aerodynamic valve without moving parts is preferred. During the exhaust stroke with an aerodynamic valve, a boundary layer builds in the valve and turbulent eddies choke off much of the reverse flow. Moreover, the exhaust gases are of a much higher temperature than the inlet gases. Therefore, the viscosity of the gas is much higher and the reverse resistance of the inlet diameter, in turn, is much higher than that for forward flow through the same opening. These phenomena, along with the high inertia of the exhausting gases in the resonance tube, combine to yield preferential and mean flow from inlet to exhaust. Thus, the preferred pulse combustor is a self-aspirating engine, drawing its own air and fuel into the combustion chamber and auto-ejecting combustion products.

Rapid pressure oscillations in the combustion chamber generate an intense oscillating flow field. In the case of coal combustion, the fluctuating flow field causes the products of combustion to be swept away from the reacting solid thus providing access to oxygen with little or no diffusion limitation. Second, pulse combustors experience very high mass transfer and heat transfer rates within the combustion zone. While these combustors tend to have very high heat release rates (typically 10 times those of conventional burners), the vigorous mass transfer and high heat transfer within the combustion region result in a more uniform temperature. Thus, peak temperatures attained are much lower than in the case of conventional systems. This results in a significant reduction in the formation of nitrogen oxides (NOₓ). The high heat release rates also result in a smaller combustor size for a given firing rate and a reduction in the residence time required.

Performance of atmospheric fluidized bed combustors is affected by the rate of combustion of coal, which in turn is affected by coal properties (devolatilization, swelling, fragmentation, and char combustion), feed particle size range, feed system and combustion-enhanced mechanic attrition, heat and mass transfer rates, and unit operating conditions. Furthermore, for such systems the carbon carryover into the primary particle separator is generally high due to limited residence time of fuel fines in the combustor. To achieve high carbon utilization efficiency, recycling of fines to the bed has often been practiced. These recycle processes add to system complexity and cost and, at times, are prone to plugging. According to the present invention, higher combustion efficiency can be attained because the fuel fines are burned in the pulse combustor and only the coarse coal which has been classified is burned in the fluid bed.

The three "T"s of combustion, namely, 1) temperature, 2) turbulence, and 3) residence time for the pulse combustor and the bubbling fluid-bed freeboard are quite different, as shown below.

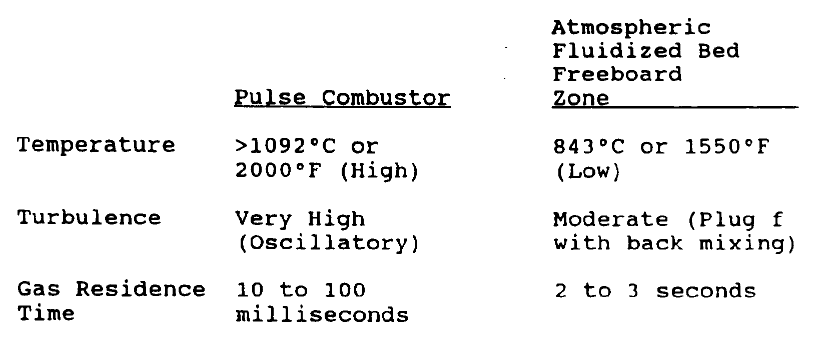

Since the present invention employs both a pulse combustor and an atmospheric fluidized bed combustor, it can handle the full size range of coarse fuel and fines. The oscillating flow field in the pulse combustor provides for high interphase and intraparticle mass transfer rates. Therefore, the fuel fines essentially burn under kinetic control. Due to the reasonably high temperature (>1093°C but less than the temperature for ash fusion to prevent slagging), combustion of fuel fines is substantially complete at the exit of the pulse combustor. The additional residence time of 1 to 2 seconds in the freeboard zone of the fluidized bed unit ensures high carbon conversion and, in turn, high combustion efficiency.

Devolatilization and combustion of fuel fines in the pulse combustor also enable the release of a significant portion of sulfur by the time the fuel fines leave the tailpipe or resonance zone. This sulfur has a high probability of capture in the dense fluid bed due to the pulse combustor effluxing into the fluid bed. The acoustic field radiated into the fluid bed enhances the mass transfer rate and in turn increases the reaction rate between the sorbent and SO₂. Acoustic enhancement in the fluid bed mass transfer process, and the fines recirculation as a consequence of the draft tube design, help achieve high sulfur capture efficiency at low Ca/S molar feed ratio which leads to lower limestone and waste disposal costs.

Pulse combustors are inherently low NOₓ devices. The rate of heat transfer in the pulsating flow is higher than that in conventional steady flow and helps create lower overall temperature in the combustion chamber. Also, the high rates of mixing between the hot combustion products and the colder residual products from the previous cycle and the incoming cold reactants create a short residence time at high temperature quenching the NOₓ production. These complementary mechanisms create an environment which approximates a well-stirred tank at relative low temperature and result in low NOₓ production. The dense fluid bed in the lower section 12 of vessel 10, due to operation at low temperature and with coarse fuel particles, enjoys a lower NOₓ production as well. Consequently, the NOₓ emissions from systems of the present invention are believed to be lower than that of conventional fluid bed combustors.

The overall heat transfer coefficient in the water-jacketed pulse combustor tailpipe is of the same order as that for tubes immersed in the dense fluidized bed. The replacement of the inefficient heat exchanger in the freeboard zone of a conventional bubbling fluidized bed combustor by the water-jacketed pulse combustor tailpipe significantly decreases the heat transfer surface area requirement and cost.

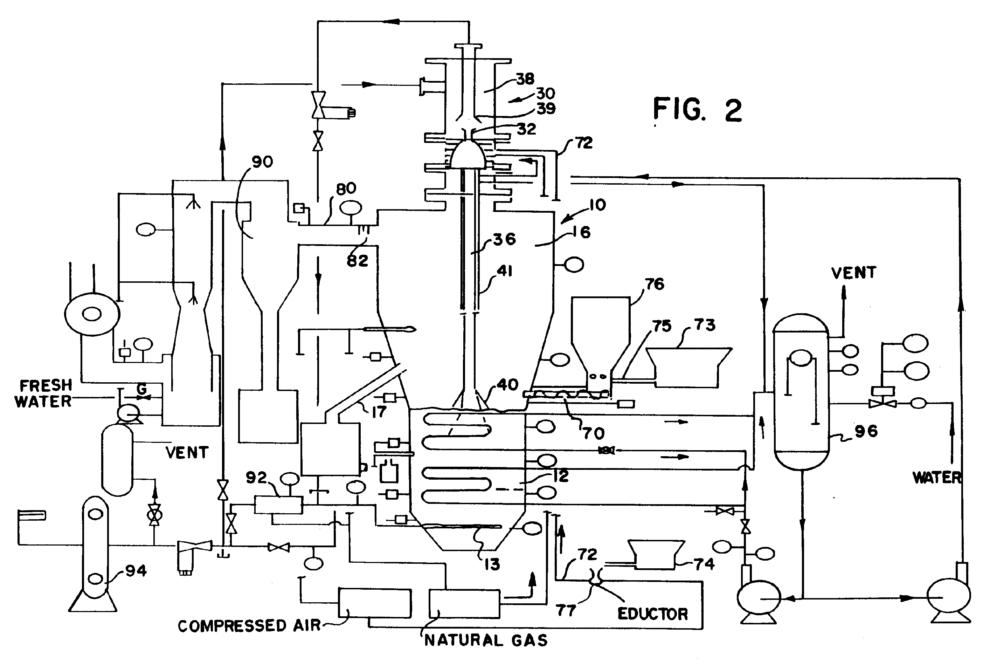

In order to establish the technical merit of the technology according to the present invention, a laboratory-scale system (1.58GJ/hr--1.5 MMBtu/hr--coal firing rate) was designed, built and tested. A schematic of the unit is shown in Figure 2. The primary objective of this work was to investigate the integration of a pulse combustor with the fluidized bed portion of a furnace. A convective section was not included since the additional expense was considered unjustified. Therefore, the steam output and the thermal efficiency of the unit tested are somewhat lower than those expected in normal practice.

In Figure 2, the apparatus as described with respect to Figure 1 is illustrated, with like members assigned like numbers, in conjunction with related process equipment. After classification of solids, e.g., coal, into fines and coarse particles (not shown), the coarse particles are maintained in coal bin 73 from which the particles are fed by a conveyor 75 into a sorbent feed bin 76 where sorbent is fed into the coal supply as noted hereinbefore. The coal-sorbent mixture is then fed to vessel 10 by feed conveyor 70 and falls onto the dense bed located in lower section 12 of vessel 10 which is being maintained in a bubbling fluidized state by fluid entering therebeneath through fluid distributor means 13. Alternatively, the coal-sorbent mixture could be fed directly into the fluidized bed instead of falling onto the top of the bed (see Figure 7 for such a structure employing feeding means 214 and 215 at both locations).

Fines separated from the coal are stored in a bin 74 therefor and are fed to an eductor 77 where they are transported via line 72 to pulse combustor 30. Assuming that pulse combustor is in an operational state, aerodynamic valve 32 pulls in an air-feed mixture on demand. As shown in Figure 2, natural gas is also fed to pulse combustor valve 32 where it also serves as fuel. Products of combustion from pulse combustor 30 then proceed with an oscillating acoustic pressure wave through resonance tube or tailpipe 36, through diffuser section 40 and into the fluidized bed. Generally speaking, heat release rate in pulse combustor 30 is in a range of from 21 to 62 MW(cu.m) (about 2 to about 6MM Btu/hr/ft³), with product gas temperature in a range of from 760 to 1927°C (about 1400 to about 3500°F). Gas velocity in the resonance tube is in a range of from 45.7 to 488 m/sec (about 150 to about 1600 feet per second) with velocity oscillation in a range of from about 20 to about 150 Hertz.

In the vessel, acoustic pressure wave levels in a range of from about 100 to about 185 dB are achievable. Likewise, temperatures are achievable in the vessel 10 up to about 1092°C (2000°F) based on volumetric heat releases from the pulse combustor in a range of 1.03 to 2.06 MW/m³ (from about 100,000 to about 200,000 Btu/hr/ft³). Temperatures in the freeboard zone of vessel 10 may then exceed 1092°C (2000°F), and are capable of destruction of organic materials. In the fluidized bed, temperatures in a range of from 815°C to 927°C (about 1500 to about 1700°F) are desired to minimize nitrogen oxides.

The acoustic wave exiting diffuser section 40 and impacting in the fluidized bed brings about enhanced mixing and heat transfer. The solid fuel in fluidized state is combusted while temperatures in the bed may be controlled by a heat transfer medium passing through tubes 60 submerged in the fluidized bed. Obviously heat transfer from the bed to the medium may be used to both control the overall temperature of the fluidized bed and/or to create a desired resultant effect on the medium, i.e., to heat water or air, to produce steam or the like.

Products of combustion then rise above the fluidized bed into the freeboard zone, where further heat transfer or reaction may take place, and from the freeboard zone through entrained solids separator 82 and out the flue gas exit 80 to cyclone 90. Since the fuel has been classified, minimal fines are elutriated into the freeboard zone, thus again lessening the release of sulfur.

Also in the overall scheme of operation, the fluidizing medium, e.g., air or steam may be preheated in preheater 92. Fluidizing medium is supplied to preheater 92 by a primary air blower 94 and/or return of excess air or other fluid from pulse combustor 30. Likewise as illustrated, steam generated in tubes 60 passes therefrom to a steam drum 96 and from drum 96 as desired.

In a high sulfur coal burning process, limestone and coarse, classified coal are fed onto the fluidized bed within vessel 10 while the fines are fed, as noted above, to pulse combustor 30 as a fuel source. Sulfur in the fines is basically removed in the pulse combustor and is picked up by the limestone in the fluidized bed. Likewise, sulfur in the coarse coal is captured by limestone in the bed in a more efficient manner than in prior art systems. To accomplish such, temperatures in the fluidized bed are preferably maintained in a range of from 760 to 954°C (about 1400 to about 1750°F). Likewise in this temperature range less nitrogen oxide byproducts are produced.

A total of 28 tests were performed on apparatus as shown in Figure 2, including shakedown and characterizations tests. The unit was tested both with and without the pulse combustor, and test parameters are given in Table 1. The system was on-line for more than 200 hours and combusted nearly 9 tons of coal. N₂O emissions measurements were made in collaboration with Drs. L.J. Muzio and G. Shiomoto of Fossil Energy Research Corporation, Laguna Hills, California.

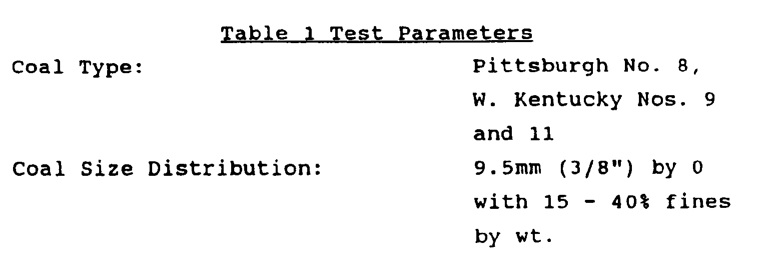

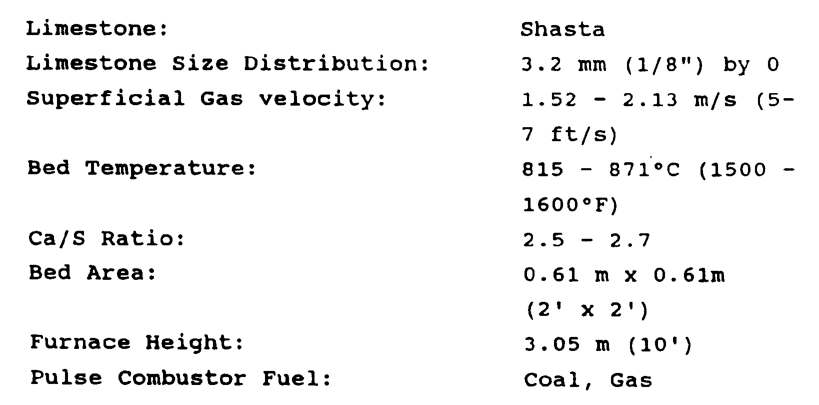

A summary comparison of the performance and emissions data from the 0.61 m x 0.61 m (2′ x 2′) facility according to the present invention with those from conventional bubbling fluidized bed combustors (taller freeboard and recycle operation) and circulating fluidized bed combustor units is given in Table 2. The comparison is for typical high-volatile bituminous coals and sorbents of average reactivity. The values indicated for the prior art fluidized bed combustors are based on published information. It is seen that the system according to the present invention exhibits superior performance in relation to the prior art. The higher combustion efficiency translates into reduced coal consumption and lower system operating cost; the improvement in sulfur capture implies less sorbent requirement and waste generation and, in turn, lower operation cost; lower NOₓ and CO emissions mean ease of siting; and greater steam-generation rate translates into less heat exchange surface area and reduced capital cost. Also, it seems that N₂O emissions from this pulsed fluidized bed technology are not insignificant but are comparable to published data on N₂O emissions indicating that the mode of operation does not have much influence on N₂O emissions. In summary, the present system performance generally (i) surpasses those of the conventional systems, (ii) is comparable to circulating fluidized bed combustion in combustion and N₂O emissions, and (iii) is better than circulating fluidized bed combustors in sulfur capture and CO and NOₓ emissions.

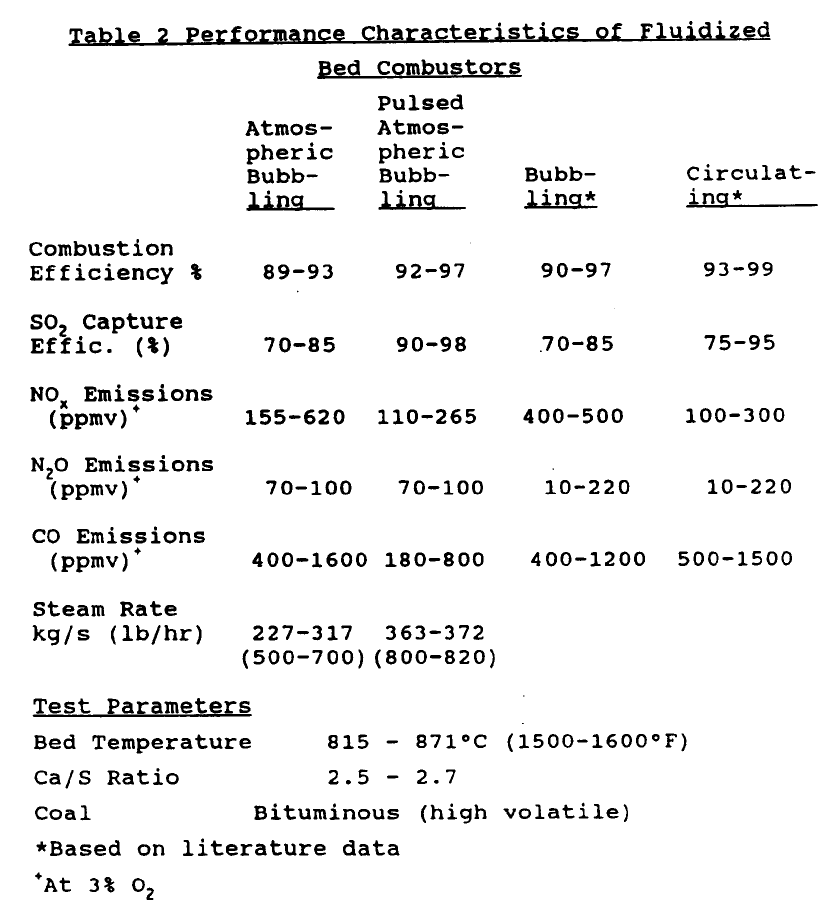

These factors indicate the present invention to be an attractive option at any scale. It is impractical and expensive to scale-down a circulating fluidized bed combustor to the 0.126 to 6.3 kg/s (1,000 to 50,000 lb/hr) steam equivalent range as noted above.

Apparatus as described heretofore has been directed primarily to a system for combusting high sulfur content coal. Such apparatus, particularly as described with respect to Figure 1, can also be employed for improved combustion of other products such as, by way of example, biomass, waste products exemplified by medical waste, industrial waste, organics and the like and for endothermic reactions, drying, calcining and the like.

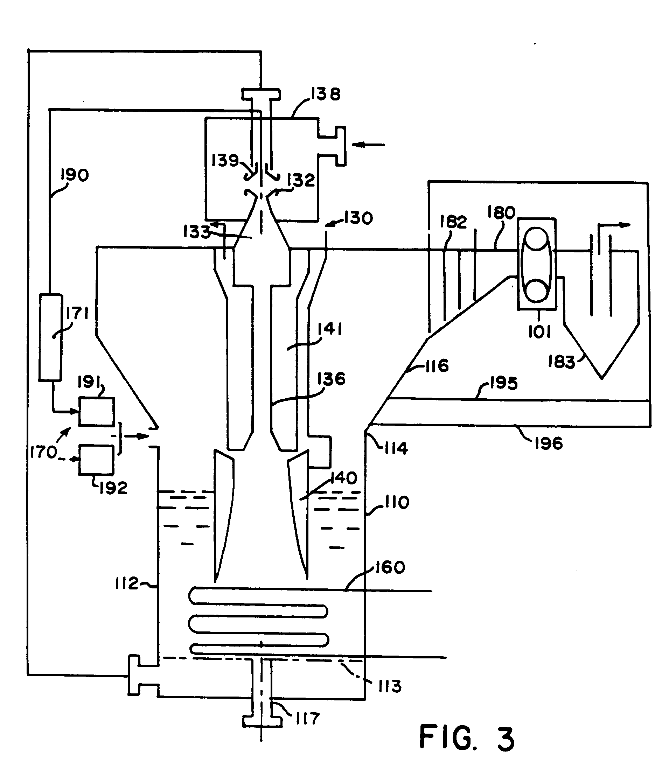

One such apparatus according to the present invention is useful for the generation of steam and is shown in Figure 3. The steam generation apparatus employs a means similar to the embodiment described above. A pulse combustor means indicated generally as 130 is integrated with a refractory-lined reaction vessel 110. Vessel 110 includes a lower section 112, an intermediate section 114, and an upper section 116 with intermediate section 114 and upper section 116 forming the previously-described freeboard area.

A fluidizing means 113 through which fluid may be introduced adequate in velocity to fluidize solids in a bed and to control bed temperature is located in lower section 112. In one embodiment of the steam generation apparatus, fluidizing means 113 utilizes a water-cooled distributor plate. A plurality of tubes or conduits 160 through which water or other heat exchange medium may pass is located within lower section 112 where the dense fluidized bed of combustion materials will be formed. These conduits form the means for transferring, or withdrawing, heat from the fluidized bed. As will be explained hereinafter, tubes 160 may form a "D" type water/steam circuit configuration.

As previously described, intermediate vessel section 114 flares outwardly and connects lower section 112 with upper section 116. The dense fluidized bed in lower vessel section 112 operates in a bubbling, turbulent mode.

Pulse combustor means 130 may include the previously described valve means comprising one or more openings through which a fuel-air mixture may be introduced into combustion chamber 133, air plenum 138 and thrust augmenter 139. Tailpipe or resonator tube 136 may be a single tube as shown or a plurality of tubes and, preferably, has a diffuser section 140 at its end. Diffuser section 140 provides for fines recirculation and increased particle resonance time in the fluidized bed for enhanced combustion and sulfur capture.

As with each of the embodiments described herein, part of the combustion chamber may be integral with vessel 110 and a portion of pulse combustor means 130 (such as diffuser section 140 in Figure 3) may extend into the fluidized bed. In other embodiments, the entire pulse combustor, including combustion chamber, resonance tube(s) and diffuser section, may be positioned outside the portion of vessel 110 where the reactions occur. In such systems, the pulse combustor remains capable of supplying the endothermic heat of reaction to the reactants within the vessel.

Resonator tube 136 preferably has a water jacket 141 surrounding at least a portion of its length. Diffuser section 140, likewise, may have a water jacket surrounding a portion of its length so that steam may be generated within the jacket for removal of heat and the need for in-bed conduits 160 may be minimized or, in fact, eliminated altogether.

Vessel 110 further includes an overbed coarse fuel and sorbent feed system generally indicated as 170, which preferably utilizes a screw conveyor. Feed system 170 includes a fuel classifier 171 for sorting fines to be fed to pulse combustor means 130 along fuel line 190 from coarse fuel fed to coarse fuel feeder 191 which is later mixed with sorbent fed from sorbent feeder 192 and fed through feed system 170 to form the fluidized bed contained in vessel 110. The sorbent is a material such as crushed limestone that absorbs sulfur-containing substances produced by combustion.

Vessel 110 may include a combustion product or flue gas exit 180 having a gas solids separator/air preheater 182. One or more baffling means to decrease gas bypassing in the gas exit may be located along same. A cyclone 183 may be employed as part of this separating means to further capture solids and regulate the gas and solids temperatures.

Multiple air staging as indicated along lines 195 and 196 from solids separator/air preheater 182 back to vessel 110 may be utilized so that emissions are further reduced.

Waste rock, materials, ash and the like are removed from vessel 110 through port 117 located at the lower end of section 112. Moreover, an ignition system (not shown) may also be provided to vessel 110 for firing the system for start-up and for operational safety.

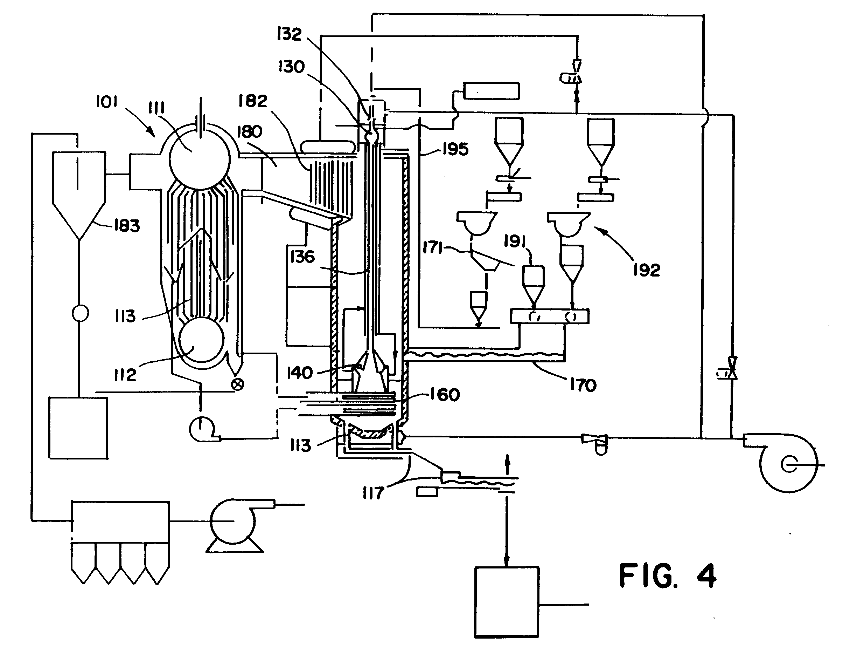

A two-drum steam generation system 101 comprising a steam drum and a mud drum is utilized to avoid elaborate water treatment. Conduits 160, as shown in Figure 4 and discussed hereinbelow, are connected to two-drum system 101 for creating steam according to this embodiment. The fluidized system for generating steam as described hereinabove operates generally in the same manner as the apparatus previously described.

In Figure 4, the steam generation apparatus as described with respect to Figure 3 is illustrated in conjunction with related process equipment with like numbers assigned to like members. After classification of the solid combustible and fluidizable material into fines and coarse particles by classifier 171, coarse particles are transported to coarse fuel feeder 191 and fines are transported along fuel line 195 to pulse combustor 130. Sorbent is added to the coarse fuel by means of a sorbent feeder system 192 and then the combined fuel mixture is fed to vessel 110 by feeding means 170 such as the screw conveyor shown in Figure 4. The fuel-sorbent mixture falls onto the dense bed located in vessel 110 which is being maintained in a bubbling fluidized state by fluid entering therebeneath through fluid distributor means 113. Fluid distributor means 113 may include a sloping design as shown in Figure 4 which aids in preventing solid product dead zones. The sloping design in combination with fluid bed drain system 117 also facilitates rock and agglomerate removal.

When pulse combustor 130 is operational, aerodynamic valve 132 pulls in an air-feed mixture on demand. Products from the combustion occurring in pulse combustor 130 proceed with an oscillating acoustic pressure wave through resonance tube or tailpipe 136, through diffuser section 140 and into the fluidized bed. The acoustic wave exiting diffuser section 140 and impacting in the fluidized bed facilitates enhanced mixing and heat transfer. The solid fuel in fluidized state is combusted while temperatures in the bed are controlled by removal of heat through the heat transfer medium passing through conduit or tubes 160 submerged in the fluidized bed.

The heat exchange medium carried in conduits 160 submerged within the fluidized bed are connected to two-drum steam generation system 101 through more conduits arranged in a "D" configuration. Two-drum system 101 comprises a steam drum 111, a mud drum 112 and one or more boiler banks 113. The heat exchange medium, after being sufficiently heated within vessel 110, travels to two-drum steam generation system 101 whereupon the heat exchange medium surrounds steam drum 111, mud drum 112 and boiler banks 113. Water that has been pumped into steam drum 111 is then converted thereby into steam and is released or used accordingly.

Products of combustion also rise above the fluidized bed and into the freeboard zone, where further heat transfer or reaction takes place. From the freeboard zone above the lower section of vessel 110, the heated gases pass to and through an entrained solids separator/air preheater 182 and out flue gas exit 180 to two-drum steam generation system 101. The heat flowing along flue gas exit 180 serves to additionally heat the water contained within steam drum 111 and converts same into steam.

As in the previously described embodiment, the fluidizing medium may be preheated by solids separator/air preheater 182. Moreover, an auxiliary fuel such as natural gas may be used for system start-up (not shown) as described with respect to the previous embodiment. Furthermore, in the steam generation system described, in-bed conduits or tubes 160 may be eliminated and heat exchange may rely completely on heat provided from flue gas exit 180, water-jacketed resonance tube 136 and/or diffuser section 140.

The apparatus of the present invention may also be used for drying materials or heating air. For example, the system may be used as a heat source in place of a coal-fired stoker unit for thermally drying coal. When used in such a manner, different variations of the system are possible such as a water-jacketed fluidized bed, air-cooled tubes embedded in the fluidized bed, and an adiabatic fluidized bed. These three variations differ mainly with regard to the method of cooling the fluidized bed.

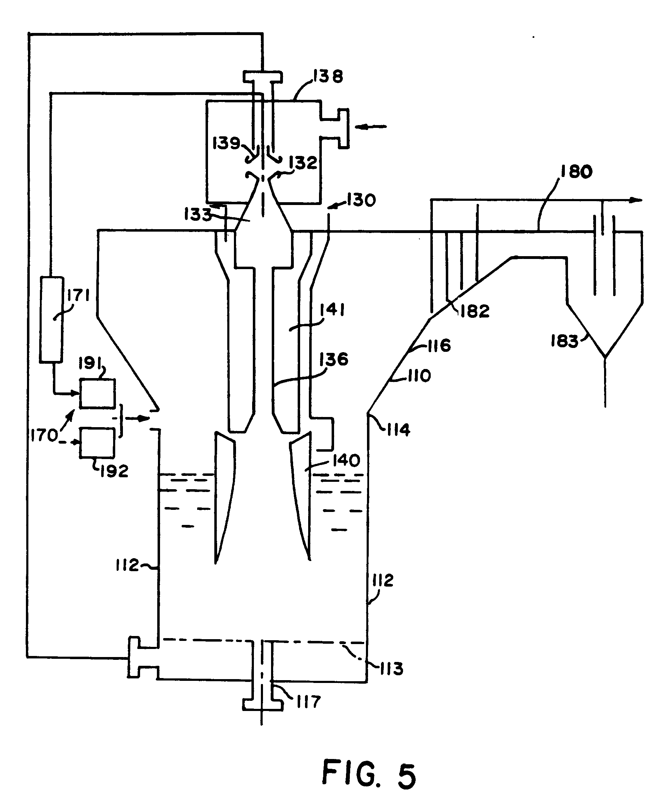

An embodiment of a material drying or air-heating apparatus according to the present invention is shown in Figure 5 wherein like numerals to those in Figure 3 represent like members. This embodiment shows the inventive apparatus using a high excess air level to operate the fluidized bed in a near adiabatic mode. This embodiment employs the features of the steam generation apparatus discussed above and shown in Figure 3 with the exception of the two-drum steam generation system denoted as 101 in Figures 3 and 4. Furthermore, drying/air-heating may also be effected without in-bed conduits or tubes 160 shown in Figure 3.

Refractory-lined vessel 110 minimizes heat loss and the expanded freeboard section decreases gas velocity, increases gas resonance time, and decreases elutriation of fines. A resonance tube or tailpipe 136 surrounded by water jacket 141 eliminates the need for expensive alloys in this embodiment. Moreover, this embodiment preferably employs a water-cooled distributor 113 to minimize thermal stresses and a bed drain 117 to facilitate rock removal and maintain bed height.

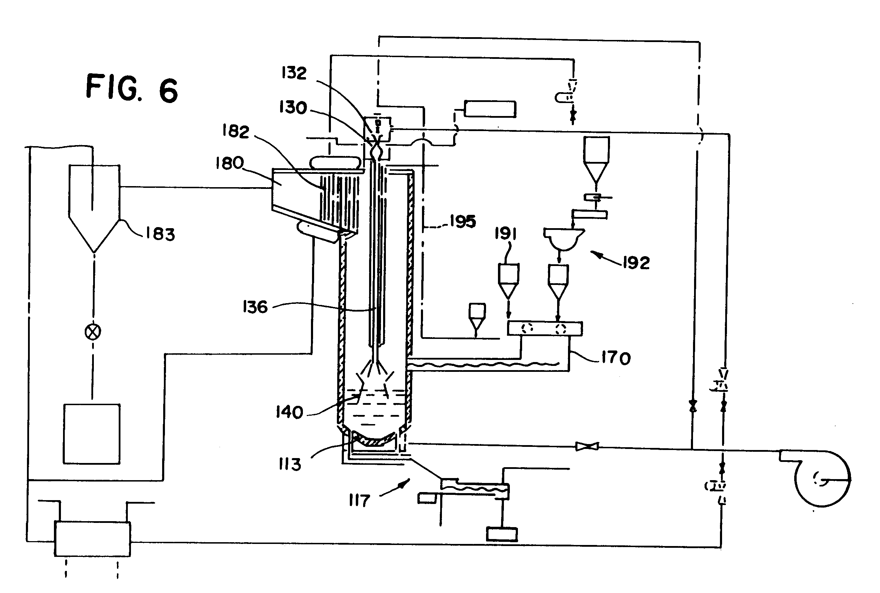

A process diagram employing the above-described apparatus for air heating or material drying is shown in Figure 6. The system is essentially identical to the process system described for the steam generation apparatus in Figure 4 with the exception that the two-drum steam generation system 101 as shown in Figure 4 is eliminated. Furthermore, the in-bed tubes or conduits 160 shown in Figure 4 have, likewise, been eliminated.

The present invention may also be employed as a waste incineration apparatus as shown in Figure 7. This design incorporates means 220 for feeding waste which may include means 214 for feeding the waste materials to the top of the fluidized bed and/or means 215 for feeding waste directly into the fluidized bed depending on the characteristics of the waste used. Rather than being completely integrated with vessel 210, resonance tube 236 of pulse combustor means 230 may be located above vessel 210. Diffuser section 240 may be located above the fluid bed's splash zone as shown in Figure 7. A conduit 260 may complete a circuit between thrust augmenter 239 and the portion of resonance tube 236 located above vessel 210 to provide a boost in pressure to thrust augmenter 239. This allows for enhanced mixing within the freeboard section of the reaction vessel.

Like the previously described embodiments, the apparatus of this embodiment comprises a distributor means 213 for maintaining the fluidized bed in a turbulent state, a bed drain system 217 for removal of ash and rock, a solids separator/air preheater 282, means for separating solids from the combustion products and returning the products to the vessel including a flue gas exit conduit 280 and a water-cooled cyclone 283 to capture solids and regulate the gas and solids temperatures so that metal vapors are captured.

A schematic of the system for the waste incineration process utilizing the apparatus shown in Figure 7 is shown in Figure 8. Due to possible erosion and corrosion problems of the waste materials relative to the resonance tube and diffuser sections, the resonance tube and diffuser is located above the fluidized bed. Furthermore, due to the same erosion and corrosion problems, immersed in-bed tube banks are not utilized in this apparatus. Like the apparatus previously shown in Figures 4 and 6, distributor means 113 is designed with a sloping configuration to prevent solid dead zones and to facilitate rock and agglomerate removal from the bed drain.

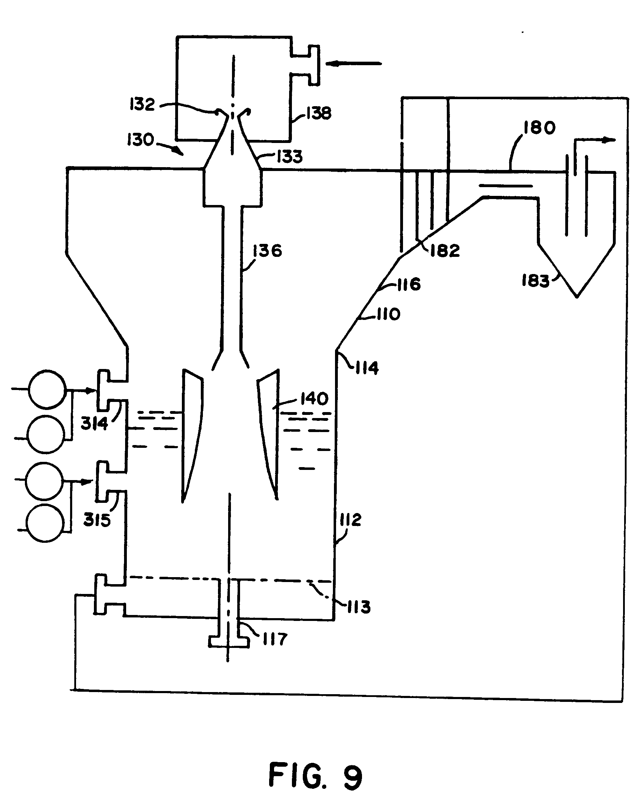

The present invention may also be used for endothermic reactions such as gasification, calcination, pyrolysis, and partial oxidation reactions. An apparatus designed for these processes is shown in Figure 9. The apparatus used in this embodiment is substantially identical to the apparatus used for air heating or material drying and shown in Figure 5, and like numerals represent like members. However, thrust augmenter shown as 139 in Figure 5 or the water jacket 141 surrounding the resonance tube 136 in Figure 5 may be eliminated. Additionally, like the apparatus shown in Figure 7 for waste incineration, the apparatus for carrying out endothermic reactions may include means 314 for feeding the fluidized bed material either overbed or means 315 for feeding directly into the bed.

In such processes, the bed is composed of solid fuels and the pulse combustor provides direct endothermic heat of reaction to produce such products as synthetic fuel gases, calcined products, etc. As with each of the embodiments described herein, the terminal end of the pulse combustor, either the free end of the resonance tube or the diffuser section, may extend into the bed of material or may be positioned apart from the bed.

## Claims

1. A pulsed fluidized bed reactor apparatus, comprising a reactor vessel (10), means (70) for feeding a fluidizable solid material into said vessel intermediate the height of same, means for supplying a fluidizing medium (13) for said solid material into said vessel below said solid material entrance to said vessel to estabish a fluidized bed of solid material therebetween, heat transfer means (60) located in said vessel with respect to said fluidized bed to withdraw heat therefrom; and flue gas exhaust means (80, 180) in communication with said vessel to exhaust products of combustion therefrom; said reactor apparatus being characterized by a pulse combustor unit (30, 130) extending into said vessel, said pulse combustor unit (30, 130) comprising a combustion chamber (34), valve means (32) associated with said combustion chamber (34) for admitting a fuel-air mixture thereto, a resonance chamber (36) in communication with said combustion chamber (34) and extending outwardly therefrom toward said fluidized bed, and an outer free end of said resonance chamber (36) being located upstream with respect to said fluidized bed to permit gaseous products from said resonance chamber to act directly thereon.

2. Apparatus as defined in claim 1 comprising further means (40) located at a free end of said resonance chamber to diffuse gaseous output therefrom.

3. Apparatus as defined in claim 2 wherein said diffuser means (40) is located within said vessel where said fluidized bed will be maintained.

4. The apparatus as defined in claim 2 wherein said diffuser means (40) is located within said vessel (10) and above said fluidized bed.

5. The apparatus as defined in claim 4 wherein said diffuser means (40) extends into said reactor vessel (10) so that said diffuser means is in direct contact with said fluidized bed of material.

6. Apparatus as defined in claim 1 comprising further a solids classifier (71) for separating said solids into coarse solids and fines, the coarse solids being fed to said vessel (10) by said feeding means (70), and the apparatus having means (72) for supplying the fines to said pulse combustor unit (30).

7. The apparatus as defined in claim 1 further comprising a water jacket (41) surrounding at least a portion of said pulse combustor unit (30).

8. Apparatus as defined in claim 1 wherein said resonance chamber (36) of said pulse combustor unit (30) is at least one elongated pipe.

9. Apparatus as defined in claim 8 wherein said at least one elongated pipe has a water jacket (41) about at least a portion of the length of same.

10. The apparatus as defined in claim 1 wherein said resonance chamber (36) extends into said reactor vessel (10) so that said resonance chamber is in direct contact with said fluidized bed of material.

11. Apparatus as defined in claim 1 wherein said vessel (10) comprises a lower section (12) where said fluidized bed will be maintained and an expanded upper section (14).

12. Apparatus as defined in claim 1 wherein said flue gas exhaust means (80) includes an inertial entrained solids separator (82).

13. Apparatus as defined in claim 1 wherein said heat transfer means (60) is a conduit located within said vessel (10) where said fluidized bed will be located, said conduit being adapted to transport a heat transfer medium therethrough.

14. The apparatus as defined in claim 1 wherein said pulse combustor unit (30) further comprises means (39) for augmenting the thrust of gaseous products produced by said pulse combustor unit.

15. The apparatus as defined in claim 1 wherein said exhaust means (180) is in further communication with a means (101) for generating steam.

16. The apparatus as defined in claim 15 wherein said steam generation means (101) includes means for supplying water to a steam drum (111) and wherein said steam drum is in communication with a mud drum.

17. The apparatus as defined in claim 1 wherein said heat transfer means (60) supplies heat to a system for heating air.

18. The apparatus as defined in claim 1 wherein said heat transfer means (60) supplies heat to a system for drying materials.

19. The apparatus as defined in claim 1 wherein said heat transfer means (60) is in communication with a means for generating steam.

20. A pulsed fluidized bed apparatus comprising
a) a reaction vessel (210);
b) means (214, 215, 220) for feeding waste materials into said vessel;
c) means for fluidizing said waste materials, said fluidizing means including a distributor device (213) positioned within said vessel so that said waste materials may be placed in a fluidized state by said fluidizing means;
d) a pulse combustor means (230) extending into said vessel (210), said pulse combustor means comprising a combustion chamber and at least one opening associated with said combustion chamber for admitting one or more fuel-air mixtures thereto, said pulse combustor means further including a resonance chamber (236) in communication with said combustion chamber and extending toward the location of said waste materials within said vessel (210), said resonance chamber including diffuser means (240) located at the end of said resonance chamber (236) extending toward the waste materials within said vessel such that the velocity of gaseous products escaping from said resonance chamber is reduced, said resonance chamber and diffuser means being disposed upstream of said waste materials so that said gaseous products may act on said waste materials; and
e) flue gas exit means (280) in communication with said vessel (210) so that combustion products may be removed from said vessel, said flue gas exit means including means (283) for separating solids from gases in said combustion products and returning said solids to said vessel for further reaction.

21. A process of combusting solid fuel wherein a fluidized bed of solid fuel is established and maintained within a vessel (10) therefor and about a heat transfer means (60) and wherein a heat transfer medium is circulated through said heat transfer means (60) to receive heat therefrom for predetermined treatment of said medium and products of combustion are exhausted from said vessel after separation of entrained solids therefrom; the process being characterized by pulse combusting (in 30) a fuel-air mixture in a fashion to create a pulsating flow of combustion products therefrom and an acoustic pressure wave and directing said pulsating flow of combustion products and said pressure wave downstream towards said fluidized bed of fuel, to act directly on said fluidized bed of solid fuel for combustion of said solid fuel.

22. A process as defined in claim 21 wherein said fluidized solid fuel is coal and wherein the fuel for pulse combusting is at least in part coal fines.

23. A process as defined in claim 22 wherein said coal has a high sulfur content and wherein a sorbent for sulfur is an admixture with said solid fuel.

24. A process as defined in claim 23 wherein said sorbent is limestone, and is present in a ratio of two to three times the amount of sulfur in the coal.

25. A process as defined in claim 21 wherein said acoustic pressure wave is in a range of from 100 to 185 dB.

26. A process as defined in claim 21 wherein said pulse combustion produces a heat release in a range of from 10.3 to 103 MW/m³ (1 x 10⁶ to 10 x 10⁶ Btu/hr/ft³) and a product gas temperature in a range of from 760 to 1927°C (1400 to 3500°F) and a gas velocity in a range of from 45.7 to 488 m/sec (150 to 1600 feet per second).

27. A process as defined in claim 21 wherein gas for fluidizing said bed of solid fuel has a velocity in a range of from 1.2 to 4 m/sec (4 to 13 feet per second).

28. A process as defined in claim 21 wherein said combustion products that are exhausted from said vessel (10) are supplied to a steam generation system for the creation of steam.

29. A process as defined in claim 21 further including the step of circulating a heat transfer medium through a heat transfer means (160) embedded in said fluidized bed so that heat is withdrawn from said fluidized bed thereby.

30. A process as defined in claim 29 wherein said heat transfer medium is fed to a system (101) for generating steam and steam is generated thereby.

31. A process as defined in claim 21 wherein heat created through said combustion is supplied to a system for drying materials.

32. A process as defined in claim 21 wherein heat produced by said combustion is supplied to a system for heating air.

33. A process as defined in claim 21 wherein said solid fuel is a waste material and said process incinerates said waste material.

## Patentansprüche

1. Eine pulsierte Wirbelschichtreaktor-Anlage, die ein Reaktorgefäß (10), Einrichtungen (70) zum Einführen eines verwirbelbaren festen Materials in dieses Gefäß im Mittelteil seiner Höhe, Einrichtungen zum Einleiten eines Verwirbelungsmediums (13) für dieses feste Material in das Gefäß unterhalb des Eingangs für das feste Material in das Gefäß, um eine Wirbelschicht aus festem Material dazwischen auszubilden, Wärmeübertragungsmittel (60), die in dem Gefäß so bezüglich des Wirbelschichtbettes liegen, daß sie Wärme von diesem abführen, und Abgasabzugseinrichtungen (80, 180) in Kommunikation mit dem Gefäß, um Verbrennungsprodukte von diesem abzuleiten, umfaßt; wobei die Reaktoranlage dadurch gekennzeichnet ist, daß sich eine gepulste Verbrennungseinheit (30, 130) in das Gefäß erstreckt, die gepulste Verbrennungseinheit (30, 130) eine Verbrennungskammer (34), Ventileinrichtungen (32), die mit der Verbrennungskammer (34) verbunden sind, um ein Brennstoff-Luft-Gemisch hier zuzuführen, eine Resonanzkammer (36) in Kommunikation mit der Verbrennungskammer (34), die sich von dieser nach außen in Richtung auf das Wirbelschichtbett erstreckt, umfaßt und ein äußeres freies Ende der Resonanzkammer (36) stromaufwärts bezüglich des Wirbelschichtbettes gelegen ist um zu gestatten, daß gasförmige Produkte von der Resonanzkammer direkt auf dieses einwirken.

2. Anlage nach Anspruch 1, die weiterhin Mittel (40) umfaßt, die an einem freien Ende der Resonanzkammer gelegen sind, um gasförmigen Austrag von dieser diffus zu machen.

3. Anlage nach Anspruch 2, bei der der Diffusor (40) dort innerhalb des Gefäßes gelegen ist , wo das Wirbelschichtbett aufrechterhalten wird.

4. Die Anlage nach Anspruch 2, bei der die Mittel (40) zum Diffusmachen innerhalb des Gefäßes (10) und über dem Wirbelschichtbett gelegen sind.

5. Die Anlage nach Anspruch 4, bei der die Mittel (40) zum Diffusmachen sich in das Reaktorgefäß (10) so erstrecken, daß der Diffusor in direktem Kontakt mit der Wirbelschicht aus dem Material steht.

6. Anlage nach Anspruch 1, die weiterhin einen Feststoffklassierer (71) zum Trennen der Feststoffe in grobe Feststoffteilchen und feine Teilchen umfaßt, wobei die groben Feststoffteilchen dem Gefäß (10) durch die Zuführungseinrichtung (70) zugeführt werden, und die Anlage Mittel (72) zum Zuführen der feinen Feststoffteilchen zu der gepulsten Verbrennungseinheit (30) aufweist.

7. Die Anlage nach Anspruch 1, die weiterhin einen Wassermantel (41) umfaßt, der wenigstens einen Teil der gepulsten Verbrennungseinheit (30) umgibt.

8. Anlage nach Anspruch 1, bei der die Resonanzkammer (36) der gepulsten Verbrennungseinheit (30) wenigstens ein langgestrecktes Rohr ist.

9. Anlage nach Anspruch 8, bei der wenigstens ein langgestrecktes Rohr einen Wassermantel (41) um wenigstens einen Teil seiner Länge herum aufweist.

10. Die Anlage nach Anspruch 1, bei der sich die Resonanzkammer (36) in das Reaktorgefäß (10) so erstreckt, daß die Resonanzkammer in direktem Kontakt mit der Wirbelschicht aus dem Material steht.

11. Anlage nach Anspruch 1, bei der das Gefäß (10) einen unteren Abschnitt (12), bei dem die Wirbelschicht aufrechterhalten wird, und einen ausgedehnten oberen Abschnitt (14) umfaßt.

12. Anlage nach Anspruch 1, bei der die Abgasabzugseinrichtung (80) eine Trennanlage (82) für durch Trägheit mitgeführte Feststoffe einschließt.

13. Anlage nach Anspruch 1, bei der die Wärmeübertragungsmittel (60) aus einer Leitung bestehen, die innerhalb des Gefäßes (10) gelegen ist, wo das Wirbelschichtbett gelegen ist, und wobei die Leitung ausgelegt ist, um durch sie ein Wärmeübertragungsmedium hindurchzutransportieren.

14. Die Anlage nach Anspruch 1, bei der die gepulste Verbrennungseinheit (30) weiterhin Mittel (39) zum Erhöhen des Druckes der gasförmigen Produkte, die von der gepulsten Verbrennungseinheit erzeugt werden, umfaßt.

15. Die Anlage nach Anspruch 1, bei der die Abzugseinrichtung (180) in weiterer Kommunikation mit einer Einrichtung (101) zum Erzeugen von Dampf steht.

16. Die Anlage nach Anspruch 15, bei der die Dampferzeugungseinrichtung (101) Mittel zum Zuführen von Wasser zu einer Dampftrommel (111) einschließt und bei der die Dampftrommel in Kommunikation mit einer Schlammtrommel steht.

17. Die Anlage nach Anspruch 1, bei der die Wärmeübertragungsmittel (60) Wärme einem System zum Erhitzen von Luft zuführen.

18. Die Anlage nach Anspruch 1, bei der die Wärmeübertragungsmittel (60) Wärme einem System zum Trocknen von Materialien zuführen.

19. Die Anlage nach Anspruch 1, bei der die Wärmeübertragungsmittel (60) mit einer Einrichtung zum Dampferzeugen in Kommunikation stehen.

20. Eine gepulste Wirbelschichtanlage, umfassend
a) ein Reaktionsgefäß (210);
b) Einrichtungen (214, 215, 220) zum Einführen von Abfallmaterialien in das Gefäß;
c) Mittel zum Verwirbeln der Abfallmaterialien, wobei die Verwirbelungsmittel eine Verteilereinrichtung (213) umfassen, die so innerhalb des Gefäßes positioniert ist, daß die Abfallmaterialien durch die Verwirbelungsmittel in einen verwirbelten Zustand gebracht werden können;
d) eine gepulste Verbrennungseinrichtung (230), die sich in das Gefäß (210) erstreckt, wobei die gepulste Verbrennungseinrichtung eine Verbrennungskammer und wenigstens eine Öffnung umfaßt, die mit der Verbrennungskammer verbunden ist zum Einführen von einem oder mehreren Brennstoff-Luft-Gemisch(en) in diese, wobei die gepulste Verbrennungseinrichtung weiterhin eine Resonanzkammer (236) in Kommunikation mit der Verbrennungskammer umfaßt, die sich in Richtung auf die Stelle der Abfallmaterialien innerhalb des Gefäßes (210) erstreckt, wobei die Resonanzkammer Diffusormittel (240) umfaßt, die an dem Ende der Resonanzkammer (236) gelegen sind, die sich in Richtung auf die Abfallmaterialien innerhalb des Gefäßes derart erstrecken, daß die Geschwindigkeit der gasförmigen Produkte, die aus dieser Resonanzkammer herauskommen, verringert wird, wobei die Resonanzkammer und die Diffusormittel stromaufwärts von den Abfallmaterialien so angeordnet sind, daß die gasförmigen Produkte auf die Abfallmaterialien einwirken können; und
e) Abgasabfuhreinrichtungen (280) in Kommunikation mit dem Gefäß (210) derart, daß Verbrennungsprodukte von dem Gefäß entfernt werden können, wobei die Abgasabfuhreinrichtungen Mittel (283) zum Abtrennen von Feststoffen von Gasen in diesen Verbrennungsprodukten und Rückführen der Feststoffe zu dem Gefäß zur weiteren Reaktion umfassen.

21. Ein Verfahren zum Verbrennen von festem Brennstoff, bei dem eine Wirbelschicht aus festem Brennstoff aufgebaut und innerhalb eines Gefäßes (10) dafür und um eine Wärmeübertragungseinrichtung (60) aufrechterhalten wird und bei dem ein Wärmeübertragungsmedium durch die Wärmeübertragungseinrichtung (60) zirkulieren gelassen wird, damit es von dieser für vorherbestimmte Behandlung des Mediums Wärme aufnimmt, und Verbrennungsprodukte von dem Gefäß nach Abtrennung von mitgeführten Feststoffen von ihm abgelassenwerden; wobei das Verfahren dadurch gekennzeichnet ist, daß ein Brennstoff-Luft-Gemisch auf eine Weise impulsmäßig verbrannt wird (in 30), um einen pulsierenden Strom aus Verbrennungsprodukten aus ihm zu erzeugen und eine akustische Druckwelle zu erzeugen und dieser pulsierende Strom aus Verbrennungsprodukten und die Druckwelle stromabwärts in Richtung auf die Wirbelschicht aus Brennstoff gerichtet wird, damit sie direkt auf die Wirbelschicht aus festem Brennstoff zur Verbrennung des festen Brennstoffes einwirken.

22. Ein Verfahren nach Anspruch 21, bei dem der aufgewirbelte feste Brennstoff Kohle ist und bei dem der Brennstoff zur pulsierten Verbrennung wenigstens teilweise als feine Kohleteilchen vorliegt.

23. Ein Verfahren nach Anspruch 22, bei dem die Kohle einen hohen Schwefelgehalt aufweist und bei dem ein Sorptionsmittel für Schwefel eine Beimischung zu dem festen Brennstoff ist.

24. Ein Verfahren nach Anspruch 23, bei dem das Sorptionsmittel Kalkstein ist und in einem Anteil des Zwei- bis Dreifachen der Menge des Schwefels in der Kohle vorhanden ist.

25. Ein Verfahren nach Anspruch 21, bei dem die akustische Druckwelle in einem Bereich von 100 bis 185 dB liegt.

26. Ein Verfahren nach Anspruch 21, bei dem die gepulste Verbrennung eine Wärmefreisetzung in einem Bereich von 10,3 bis 103 MW/m³ (1 x 10⁶ bis 10 x 10⁶ Btu/hr/ft³) und eine Produktgastemperatur in einem Bereich von 760 bis 1927°C (1400 bis 3500°F) und eine Gasgeschwindigkeit in einem Bereich von 45,7 bis 488 m/s (150 bis 1600 Fuß pro Sekunde) erzeugt.

27. Ein Verfahren nach Anspruch 21, bei dem Gas zum Verwirbeln des Bettes aus festem Brennstoff eine Geschwindigkeit in einem Bereich von 1,2 bis 4 m/s (4 bis 13 Fuß pro Sekunde) aufweist.

28. Ein Verfahren nach Anspruch 21, bei dem die Verbrennungsprodukte, die von dem Gefäß (10) abgesaugt werden, einem Dampferzeugungssystem für die Erzeugung von Dampf zugeführt werden.

29. Ein Verfahren nach Anspruch 21, das weiterhin den Schritt umfaßt, daß ein Wärmeübertragungsmedium durch eine Wärmeübertragungseinrichtung (160), die in der Wirbelschicht eingebettet ist, so zirkulieren gelassen wird, daß dadurch Wärme von der Wirbelschicht abgezogen wird.

30. Ein Verfahren nach Anspruch 29, bei dem das Wärmeübertragungsmedium einem System (101) zum Erzeugen von Dampf zugeführt wird und Dampf dadurch erzeugt wird.

31. Ein Verfahren nach Anspruch 21, bei dem durch die Verbrennung erzeugte Wärme einem System zum Trocknen von Materialien zugeführt wird.

32. Ein Verfahren nach Anspruch 21, bei dem durch die Verbrennung erzeugte Wärme einem System zum Erhitzen von Luft zugeführt wird.

33. Ein Verfahren nach Anspruch 21, bei dem der feste Brennstoff ein Abfallmaterial ist und das Verfahren dieses Abfallmaterial verbrennt.

## Revendications

1. Appareil formant réacteur à lit fluidisé pulsé, comportant un réservoir (10) de réacteur, des moyens (70) pour alimenter un matériau solide pouvant être fluidisé, à l'intérieur dudit réservoir, dans une position intermédiaire en hauteur, des moyens pour envoyer un milieu fluidisant (13) pour ledit matériau solide à l'intérieur dudit réservoir en dessous de ladite entrée de matériau solide vers ledit réservoir pour établir un lit fluidisé constitué de matériau solide entre ceux-ci, des moyens de transfert thermique (60) situés dans ledit réservoir par rapport audit lit fluidisé pour extraire la chaleur de celui-ci, et des moyens (80, 180) d'échappement de gaz de combustion communiquant avec ledit réservoir pour laisser échapper les produits de la combustion provenant de celui-ci, ledit appareil formant réacteur étant caractérisé en ce qu'il comporte un ensemble (30, 130) formant brûleur à impulsions s'étendant dans ledit réservoir, ledit ensemble formant brûleur à impulsions comportant une chambre de combustion (34) des moyens (32) formant vanne associée à ladite chambre de combustion (34) pour admettre un mélange d'air-combustible vers celle-ci, une chambre de résonance (36) communiquant avec ladite chambre de combustion (34) et s'étendant vers l'extérieur à partir de celle-ci en direction dudit lit fluidisé, et une extrémité libre extérieure de la chambre de résonance (36) étant située en amont par rapport audit lit fluidisé pour permettre aux produits gazeux provenant de ladite chambre de résonance d'agir directement sur celui-ci.

2. Appareil selon la revendication 1, comportant en outre des moyens (40) situés au niveau d'une extrémité libre de ladite chambre de résonance pour diffuser les gaz de diffusion sortant de celle-ci.

3. Appareil selon la revendication 2, dans lequel lesdits moyens (40) formant diffuseur sont situés à l'intérieur dudit réservoir, là où ledit lit fluidisé sera maintenu.

4. Appareil selon la revendication 2, dans lequel lesdits moyens (40) formant diffuseur sont situés à l'intérieur dudit réservoir (10) et au-dessus dudit lit fluidisé.

5. Appareil selon la revendication 4, dans lequel lesdits moyens (40) formant diffuseur s'étendent à l'intérieur dudit réservoir (10) formant réacteur de telle sorte que lesdits moyens formant diffuseur soient en contact direct avec ledit lit fluidisé de matériau.

6. Appareil selon la revendication 1, comportant en outre un dispositif de classification des solides (71) destiné à séparer lesdits solides en solides grossiers et fines, les solides grossiers étant envoyés vers ledit réservoir (10) par lesdits moyens d'alimentation (70), et l'appareil ayant des moyens (72) pour envoyer les fines vers ledit ensemble (30) formant brûleur à impulsions.

7. Appareil selon la revendication 1, comportant en outre une enveloppe d'eau (41) entourant au moins une partie dudit ensemble (30) formant brûleur à impulsions.

8. Appareil selon la revendication 1, dans lequel ladite chambre de résonance (36) dudit ensemble (30) formant brûleur à impulsions est constituée d'au moins un tuyau allongé.

9. Appareil selon la revendication 8, dans lequel ledit au moins un tuyau allongé a une enveloppe d'eau (41) autour d'au moins une partie de sa longueur.

10. Appareil selon la revendication 1, dans lequel ladite chambre de résonance (36) s'étend à l'intérieur dudit réservoir (10) formant réacteur de telle sorte que ladite chambre de résonance soit en contact direct avec ledit lit fluidisé de matériau.

11. Appareil selon la revendication 1, dans lequel ledit réservoir (10) est constitué d'un tronçon inférieur (12) dans lequel ledit lit fluidisé est maintenu et un tronçon supérieur expansé (14).

12. Appareil selon la revendication 1, dans lequel lesdits moyens (80) d'échappement de gaz de combustion comportent un séparateur par inertie (82) des solides entraînés.

13. Appareil selon la revendication 1, dans lequel lesdits moyens de transfert thermique (60) sont constitués d'un conduit situé à l'intérieur dudit réservoir (10) là où ledit lit fluidisé sera situé, ledit conduit étant adapté pour transporter de manière traversante un milieu de transfert thermique.

14. Appareil selon la revendication 1, dans lequel ledit ensemble (30) formant brûleur à impulsions comporte en outre des moyens (39) pour augmenter la poussée des produits gazeux fournis par ledit ensemble formant brûleur à impulsions.

15. Appareil selon la revendication 1, dans lequel lesdits moyens d'échappement (180) sont en outre en communication avec des moyens (101) destinés à produire de la vapeur.

16. Appareil selon la revendication 15, dans lequel lesdits moyens (101) de production de vapeur comportent des moyens pour envoyer de l'eau vers un tambour (111) pour vapeur et dans lequel ledit tambour pour vapeur communique avec un tambour de boue.

17. Appareil selon la revendication 1, dans lequel lesdits moyens de transfert thermique (60) envoient de la chaleur vers un système pour chauffer de l'air.

18. Appareil selon la revendication 1, dans lequel lesdits moyens de transfert thermique (60) envoient de la chaleur vers un système pour sécher des matériaux.

19. Appareil selon la revendication 1, dans lequel lesdits moyens de transfert thermique (60) communiquent avec des moyens pour produire de la vapeur.

20. Appareil à lit fluidisé comportant
a) un réservoir de réaction (210),
b) des moyens (214, 215, 220) pour envoyer des matériaux de déchets à l'intérieur dudit réservoir,
c) des moyens pour fluidiser lesdits matériaux de déchets, lesdits moyens de fluidisation comportant un dispositif distributeur (213) positionné à l'intérieur dudit réservoir de telle sorte que lesdits matériaux de déchets soient placés dans un état fluidisé par les moyens de fluidisation,
d) des moyens (230) formant brûleur à impulsions s'étendant à l'intérieur dudit réservoir (210), lesdits moyens formant brûleur à impulsions comportant une chambre de combustion et au moins une ouverture associée à ladite chambre de combustion pour admettre un ou plusieurs mélanges de combustible-air vers celle-ci, lesdits moyens formant brûleur à impulsions comportant en outre une chambre de résonance (236) communiquant avec ladite chambre de combustion et s'étendant en direction de l'emplacement desdits matériaux de déchets à l'intérieur dudit réservoir (210), ladite chambre de résonance comportant des moyens (240) formant diffuseur situés au niveau de l'extrémité de ladite chambre de résonance (236) s'étendant en direction des matériaux de déchets à l'intérieur dudit réservoir de telle sorte que la vitesse des produits gazeux s'échappant de ladite chambre de résonance soit réduite, ladite chambre de résonance et les moyens formant diffuseur étant agencés en amont desdits matériaux de déchets de telle sorte que lesdits produits gazeux puissent agir sur lesdits matériaux de déchets, et
e) des moyens (280) formant sortie de gaz de combustion communiquant avec ledit réservoir (210) de telle sorte que les produits de combustion puissent être enlevés dudit réservoir, lesdits moyens formant sortie de gaz de combustion comportant des moyens (283) pour séparer les solides des gaz dans lesdits produits de combustion et retourner lesdits solides vers ledit réservoir pour une autre réaction.

21. Procédé de combustion de combustible solide dans lequel le lit fluidisé constitué de combustible solide est établi et maintenu à cet effet à l'intérieur d'un réservoir (10) et autour de moyens de transfert thermique (60) et dans lequel un milieu de transfert thermique est mis en circulation à travers lesdits moyens de transfert thermique (60) pour recevoir la chaleur provenant de ceux-ci pour un traitement prédéterminé dudit milieu et les produits de combustion sont mis à l'échappement à partir dudit réservoir après séparation des solides entraînés à partir de ceux-ci, le processus étant caractérisé en ce qu'on brûle par impulsions (en 30) un mélange combustible-air de manière à créer un écoulement pulsatoire de produits de combustion à partir de celui-ci et une onde de pression acoustique et diriger ledit écoulement pulsatoire de produits de combustion et ladite onde de pression en aval vers ledit lit fluidisé de combustible, pour agir directement sur ledit lit fluidisé constitué de combustible solide pour la combustion dudit combustible solide.

22. Procédé selon la revendication 21, dans lequel ledit combustible solide fluidisé est du charbon et dans lequel le combustible pour combustion à impulsions est au moins en partie constitué de fines de charbon.

23. Procédé selon la revendication 22, dans lequel ledit charbon a une teneur élevée en soufre et dans lequel un absorbant du soufre est mélangé audit combustible solide.

24. Procédé selon la revendication 23, dans lequel ledit absorbant est une roche calcaire et existe selon un rapport de deux à trois fois la quantité de soufre existant dans le charbon.

25. Procédé selon la revendication 21, dans lequel ladite onde de pression acoustique est située dans une plage allant de 100 à 185 dB.

26. Procédé selon la revendication 21, dans lequel ladite combustion à impulsions produit une libération de chaleur située dans la plage allant de 10,3 à 103 MW/m³ (1 x 10⁶ à 10 x 10⁶ Btu/hr/ft³) et une température de gaz produit située dans la plage allant de 760 à 1927°C (1400 à 3500°F) et une vitesse de gaz située dans la plage allant de 45,7 à 488 m/s (150 à 1600 pieds par seconde).

27. Procédé selon la revendication 21, dans lequel le gaz destiné à la fluidisation dudit lit de combustible solide a une vitesse située dans la plage allant de 1, 2à 4 m/s (4 à 13 pieds par seconde).

28. Procédé selon la revendication 21, dans lequel lesdits produits de combustion qui s'échappent dudit réservoir (10) sont envoyés vers un système de production de vapeur destiné à la création de vapeur.

29. Procédé selon la revendication 21, comportant en outre l'étape consistant à mettre en circulation un milieu de transfert thermique à travers des moyens 160) de transfert thermique enrobés dans ledit lit fluidisé de telle sorte que la chaleur soit extraite par ceux-ci dudit lit fluidisé.

30. Procédé selon la revendication 29, dans lequel ledit milieu de transfert thermique est envoyé vers un système (101) pour produire de la vapeur et de la vapeur est ainsi produite.

31. Procédé selon la revendication 21, dans lequel la chaleur créée par l'intermédiaire de ladite combustion est envoyée vers un système de séchage de matériaux.

32. Procédé selon la revendication 21, dans lequel ladite chaleur produite par ladite combustion est envoyée vers un système de chauffage d'air.

33. Procédé selon la revendication 21, dans lequel ledit combustible solide est un matériau de déchets et ledit procédé incinère ledit matériau de déchets.
